# EUROPEAN PATENT APPLICATION

(11) **EP 2 993 852 A1**
(43) Date of publication of application: **09.03.2016**
(21) Application number: 13886062.2
(22) Date of filing: 22.11.2013
(51) Int. Cl.: H04L 29/06

(54) **METHOD, EQUIPMENT AND SYSTEM FOR FORWARDING PACKETS IN INFORMATION CENTRIC NETWORK (ICN)**

(30) Priority: 31.05.2013 CN 201310211695
(71) Applicant: Huawei Technologies Co., Ltd., Longgang District Shenzhen, Guangdong 518129 (CN)
(72) Inventor: FAN, Lingyuan, Shenzhen Guangdong 518129 (CN); GE, Wenmin, Shenzhen Guangdong 518129 (CN); YAN, Zhefeng, Shenzhen Guangdong 518129 (CN)
(74) Representative: Epping - Hermann - Fischer
(86) International application number: PCT/CN2013/087659
(87) International publication number: WO 2014/190690

(57) **Abstract**

Disclosed are a method, equipment and system for forwarding packets in an Information Centric Network (ICN). The method includes: content request packets sent by a first route node in a Virtual Private Network (VPN) are received by a first route node in a public network; the content request packets carry the content name of the request content and the private identification for identifying the request content as the private content; the container identification of the first container for storing the request content is obtained; the content request packets are forwarded according to the container identification of the first container so as to forward the content request packets to a second route node in the VPN, and the content response packets carrying the request content are returned according to the content name of the request content. The method, equipment and system for forwarding packets in the embodiments of the present invention can establish VPN services under the ICN framework, can ensure privacy of content simultaneously without increasing extra devices or route tables, thus realizing high quality service with low cost and improving user experience.

## Description

### TECHNICAL FIELD

Embodiments of the present application relate to the field of communication, and particularly to a method, an apparatus and a system for forwarding a packet in an Information Centric Network ICN.

### BACKGROUND

Internet protocol (Internet Protocol, abbreviated as "IP") has gained great success and promoted internet everywhere. "Terminal" is taken as a core at the beginning of IP, and an IP packet identified by a destination IP address and a source IP address carries a session between two terminals, therefore, IP is a terminal centric network protocol. Today, however, people uses internet mainly for acquiring information, not for the session between terminals. For example, applications such as network news, search engine, network music, network video, blog, microblog, social networking site and network forum are mainly for producing, propagating and sharing various kinds of information, and people does not care the source of the information while acquiring the information. This is a new information centric or content centric mode. In view of the problem that the information centric mode of the internet application is not matched with the terminal centric mode of the IP, the waist of the sandglass mode of the internet is redefined by research community, and a new future internet architecture directly oriented to information and content is researched.

In all architectures of information centric network (Information Centric Network, abbreviated as "ICN"), a named data network (Named Data Network, abbreviated as "NDN") has a great influence. The NDN is developed from a content centric networking (Content Centric Networking, abbreviated as "CCN") led by Van Jacobson. It is considered in the NDN and CCN that the future network should be based on direct content-based naming and routing, structural content naming similar to URL is used, the caching function is achieved by a content store (Content Store, abbreviated as "CS") in a NDN router, and the next hop is determined by longest match between a content name of requested content and a content name prefix in a forwarding information base (Forwarding Information Base, abbreviated as "FIB").

In researching the information centric network architecture, migration of applications running on the existing IP network such as a virtual private network (Virtual Private Network, abbreviated as "VPN") to the future information centric network such as NDN/CCN has become a focus concerned in the research field. The multi-protocol label switching (Multi-Protocol Label Switching, abbreviated as "MPLS") VPN is taken as an example in VPN service under the IP network, multiple virtual routers need to be created on the PE router in a case that the network structure is complex and includes multiple VPNs, in order that a provider edge (Provider Edge, abbreviated as "PE") router can distinguish which local interface sends the VPN user routing. Each virtual router has its own routing table and forwarding table, which increases the burden of the network routers. In addition, the internet protocol security IPSec encryption technology on MPLS VPN does a lot of work for maintaining terminal-to-terminal security. The cumbersome security work makes the whole VPN service complex. More maintenance for IPsec is required; in addition to a device for establishing a termination channel is required, extra configuration and maintenance for supporting a remote user group is required. Operating cost of VPN service is increased due to these massive encryption and maintenance work. Compared with the VPN service under the IP network, the VPN service established under the ICN architecture can protect the content itself, therefore, lots of encryption and authentication technologies specially added for security of data transmitted in the VPN can be avoided, and operating cost of the VPN service is reduced. However, there is no sophisticated solution for establishing the VPN service under the ICN architecture so far.

### SUMMARY

A method, an apparatus and a system for forwarding a packet in an information centric network ICN are provided by embodiments of the present application, which can provide VPN service in an ICN architecture.

In a first aspect, a method for forwarding a packet in an ICN is provided by an embodiment of the application. The method includes: receiving, by a first routing node in a public network, a content request packet sent by a first routing node in a virtual private network VPN, where the content request packet carries a content name of requested content and a private identifier which indicates that the requested content is private content; acquiring a container identifier of a first container which stores the requested content, in a case that it is determined that the content request packet carries the private identifier; forwarding the content request packet based on the container identifier of the first container, so that the content request packet is forwarded to a second routing node in the VPN and the second routing node in the VPN returns a content response packet carrying the requested content based on the content name of the requested content.

In conjunction with the first aspect, in a first possible implementation, the first container is storage space for storing a set of private content.

In conjunction with the first aspect or in conjunction with the first possible implementation of the first aspect, in a second possible implementation, the first container includes at least one fourth routing node, the requested content is reachable in the first container by routing through one or more fourth routing node of the at least one fourth routing node, or the requested content is reachable by routing through the first container.

In conjunction with the first aspect or in conjunction with the first possible implementation of the first aspect, in a third possible implementation, the content name of the requested content corresponds one or more attribution containers, and the attribution container of the requested content is a container through which the requested content is directly reachable by routing.

In conjunction with the first aspect or in conjunction with any one of the first possible implementation to the third possible implementation of the first aspect, in a fourth possible implementation, the first container is an access container for one or more second containers, and/or one or more third container is an access container for the first container; where the access container is a container which includes at least one container and has a forwarding table entry for routing the content request packet to the at least one container.

In conjunction with the first aspect or in conjunction with any one of the first possible implementation to the fourth possible implementation of the first aspect, in a fifth possible implementation, acquiring the container identifier of the first container which stores the requested content in a case that it is determined that the content request packet carries the private identifier includes: determining whether there is a receiving interface table entry, which is matched with a receiving interface for the content request packet, in a register container table, where the receiving interface table entry in the register container table includes a preset receiving interface and a container identifier corresponding to the preset receiving interface; and in a case that there is a receiving interface table entry, which is matched with the receiving interface for the content request packet, in the register container table, taking the container identifier in the matched receiving interface table entry as the container identifier of the first container.

In conjunction with the fifth possible implementation of the first aspect, in a sixth possible implementation, the method further includes: adding the container identifier of the first container into the content request packet, so that the content request packet is forwarded by a second routing node in the public network based on the container identifier of the first container.

In conjunction with the first aspect or in conjunction with any one of the first possible implementation to the fourth possible implementation of the first aspect, in a seventh possible implementation, the content request packet further carries the container identifier of the first container, and acquiring the container identifier of the first container which stores the requested content in a case that it is determined that the content request packet carries the private identifier includes: acquiring the container identifier of the first container carried in the content request packet.

In conjunction with the first aspect or in conjunction with any one of the first possible implementation to the seventh possible implementation of the first aspect, in an eighth possible implementation, forwarding the content request packet based on the container identifier of the first container includes: determining whether there is a forwarding table entry, which is matched with the container identifier of the first container, in a forwarding information base FIB, where the forwarding table entry in the FIB includes a preset container identifier and an interface corresponding to the preset container identifier; and in a case that there is a forwarding table entry, which is matched with the container identifier of the first container, in the FIB, forwarding the content request packet based on an interface in the matched forwarding table entry.

In conjunction with the eighth possible implementation of the first aspect, in a ninth possible implementation, it is determined whether there is a pending information table PIT entry, which is matched with an extension content name of the requested content, in a PIT, before determining whether there is a forwarding table entry, which is matched with the container identifier of the first container, in the FIB, where the extension content name of the requested content is composed of the content name of the requested content and the container identifier of the first container; in a case that there is a PIT entry, which is matched with the extension content name of the requested content, in the PIT, the receiving interface for the content request packet is added into the matched PIT entry; or in a case that there is no PIT entry, which is matched with the extension content name of the requested content, in the PIT, the step of determining whether there is a forwarding table entry, which is matched with the container identifier of the first container, in the FIB, is executed.

In conjunction with the first aspect or in conjunction with any one of the first possible implementation to the ninth possible implementation of the first aspect, in a tenth possible implementation, the method further includes: receiving the content response packet returned by the second routing node in the VPN, where the content response packet carries the requested content, the content name of the requested content and the private identifier; and forwarding the content response packet based on the container identifier of the first container.

In a second aspect, a router in a public network is provided. The router includes: a receiving module configured to receive a content request packet sent by a first route in a virtual private network VPN, where the content request packet carries a content name of requested content and a private identifier which indicates that the requested content is private content; an acquiring module configured to acquire a container identifier of a first container which stores the requested content in a case that it is determined that the content request packet received by the receiving module carries the private identifier; and a sending module configured to forward the content request packet based on the container identifier of the first container acquired by the acquiring module, so that the content request packet is forwarded to a second router in the VPN and the second router in the VPN returns a content response packet carrying the requested content based on the content name of the requested content.

In conjunction with the second aspect, in a first possible implementation, the first container is storage space for storing a set of private content.

In conjunction with the second aspect or in conjunction with the first possible implementation of the second aspect, in a second possible implementation, the first container includes at least one fourth router, and the requested content is reachable in the first container by routing through one or more fourth router of the at least one fourth router, or the requested content is reachable by routing through the first container.

In conjunction with the second aspect or in conjunction with the first possible implementation of the second aspect, in a third possible implementation, the content name of the requested content corresponds to one or more attribution containers, and the attribution container of the requested content is a container through which the requested content is directly reachable by routing.

In conjunction with the second aspect or in conjunction with any one of the first possible implementation to the third possible implementation of the second aspect, in a fourth possible implementation, the first container is an access container for one or more second containers, and/or one or more third container is an access container for the first container; where the access container is a container which includes at least one container and has a forwarding table entry for routing the content request packet to the at least one container.

In conjunction with the second aspect or in conjunction with any one of the first possible implementation to the fourth possible implementation of the second aspect, in a fifth possible implementation, the acquiring module is configured to determine whether there is a receiving interface table entry, which is matched with a receiving interface for the content request packet, in a register container table, where the receiving interface table entry in the register container table includes a preset receiving interface and a container identifier corresponding to the preset receiving interface; and to, in a case that there is a receiving interface table entry, which is matched with the receiving interface for the content request packet, in the register container table, take a container identifier in the matched receiving interface table entry as the container identifier of the first container.

In conjunction with the fifth possible implementation of the second aspect, in a sixth possible implementation, the router in the public network further includes an updating module configured to add the container identifier of the first container acquired by the acquiring module into the content request packet, so that the content request packet is forwarded by a second routing node in the public network based on the container identifier of the first container.

In conjunction with the second aspect or in conjunction with any one of the first possible implementation to the fourth possible implementation of the second aspect, in a seventh possible implementation, the content request packet received by the receiving module further carries the container identifier of the first container, and the acquiring module is configured to acquire the container identifier of the first container carried in the content request packet.

In conjunction with the second aspect or in conjunction with any one of the first possible implementation to the seventh possible implementation of the second aspect, in an eighth possible implementation, the sending module includes: a first determining unit configured to determine whether there is a forwarding table entry, which is matched with the container identifier of the first container, in a forwarding information base FIB, where the forwarding table entry in the FIB includes a preset container identifier and an interface corresponding to the preset container identifier; and a sending unit configured to, in a case that the first determining unit determines that there is a forwarding table entry, which is matched with the container identifier of the first container, in the FIB, forward the content request packet based on an interface in the matched forwarding table entry.

In conjunction with the eighth possible implementation of the second aspect, in a ninth possible implementation, the sending module further includes: a second determining unit configured to determine whether there is a pending information table PIT entry, which is matched with an extension content name of the requested content, in a PIT, before the first determining unit determines whether there is a forwarding table entry, which is matched with the container identifier of the first container, in the FIB, where the extension content name of the requested content is composed of the content name of the requested content and the container identifier of the first container; and an updating unit configured to, in a case that the second determining unit determines that there is a PIT entry, which is matched with the extension content name of the requested content, in the PIT, add the receiving interface for the content request packet into the matched PIT entry; and the first determining unit is configured to, in a case that the second determining unit determines that there is no PIT entry, which is matched with the extension content name of the requested content, in the PIT, execute the step of determining whether there is a forwarding table entry, which is matched with the container identifier of the first container, in the FIB.

In conjunction with a second aspect or in conjunction with any one of the first possible implementation to the ninth possible implementation of the second aspect, in a tenth possible implementation, the receiving module is further configured to receive the content response packet returned by the second router in the VPN, where the content response packet carries the requested content, the content name of the requested content and the private identifier; the sending module is further configured to forward the content response packet received by the receiving module based on the container identifier of the first container.

In a third aspect, a system for forwarding a packet in an ICN is provided. The system includes the router in the public network, the first router in the virtual private network VPN, the second router in the VPN and a third router in the VPN in the first aspect or any one of the first possible implementation to the tenth possible implementation of the first aspect.

In conjunction with the third aspect, in a first possible implementation, the third router in the VPN includes: a first receiving module configured to receive the content request packet sent by the first router in the VPN; a first determining module configured to determine whether there is a forwarding table entry, which is matched with the content name of the requested content carried in the content request packet received by the first receiving module, in a forwarding information base FIB, where the forwarding table entry in the FIB includes a content name prefix and an interface corresponding to the content name prefix; and a first sending module configured to, in a case that the first determining module determines that there is a forwarding table entry, which is matched with the content name of the requested content, in the FIB, forward the content request packet based on an interface in the matched forwarding table entry.

In conjunction with the first possible implementation of the third aspect, in a second possible implementation, the third router in the VPN further includes: a second determining module configured to, in a case that the first determining module determines that there is no forwarding table entry, which is matched with the content name of the requested content, in the FIB, determine whether the content request packet carries information on a container of the requested content, where the information on the container of the requested content includes a container identifier for identifying at least one fourth container which stores the requested content; and a third determining module configured to, in a case that the second determining module, determine whether there is a forwarding table entry, which is matched with the container identifier in the information on the container of the requested content, in the FIB; and the first sending module is further configured to, in a case that the third determining module determines that there is a forwarding table entry, which is matched with the container identifier in the information on the container of the requested content, in the FIB, send the content request packet based on an interface in the matched forwarding table entry.

In conjunction with the first possible implementation or second possible implementation of the third aspect, in a third possible implementation, the third router in the VPN further includes a fourth determining module configured to determine whether there is content, which is matched with the content name of the requested content, in a content store CS, before the first determining module determines whether there is a forwarding table entry, which is matched with the content name of the requested content, in the FIB; the first determining module is configured to execute the step of determining whether there is a forwarding table entry, which is matched with the content name of the requested content, in the FIB, in a case that the fourth determining module determines that there is no content, which is matched with the content name of the requested content, in the CS.

In conjunction with the third possible implementation of the third aspect, in a fourth possible implementation, the third router in the VPN further includes: a fifth determining module configured to, in a case that the fourth determining module determines that there is no content, which is matched with the content name of the requested content, in the CS, determine whether there is a PIT entry, which is matched with the content name of the requested content, in the PIT; and a first updating module configured to, in a case that the fifth determining module determines that there is a PIT entry, which is matched with the content name of the requested content, in the PIT, add a receiving interface for the content request packet into the matched PIT entry; and the first determining module is configured to execute the step of determining whether there is a forwarding table entry, which is matched with the content name of the requested content, in the FIB, in a case that the fifth determining module determines that there is no PIT entry, which is matched with the content name of the requested content, in the PIT.

In conjunction with any one of the first possible implementation to the fourth possible implementation of the third aspect, in a fifth possible implementation, the first receiving module is further configured to receive the content response packet sent by the second router in the VPN, where the content response packet carries the requested content, the content name of the requested content and the private identifier; the third router in the VPN further includes a sixth determining module configured to forward the content response packet based on the content name of the requested content carried in the content response packet received by the first receiving module.

In conjunction with the fifth possible implementation of the third aspect, in a sixth possible implementation, the content response packet received by the first receiving module carries a name of a request user for the requested content; the sixth determining module includes: a first determining unit configured to determine whether there is a forwarding table entry, which is matched with the name of the request user, in the FIB; and a first sending unit configured to, in a case that the first determining unit determines that there is a forwarding table entry, which is matched with the name of the request user, in the FIB, forward the content response packet based on an interface in the matched forwarding table entry.

In conjunction with the sixth possible implementation of the third aspect, in a seventh possible implementation, the sixth determining module further includes a second determining unit configured to, in a case that the first determining unit determines that there is no forwarding table entry, which is matched with the name of the request user, in the FIB, determine whether the content response packet carries information on a container of the request user for the requested content, where the information on the container of the request user includes a container identifier for identifying at least one fifth container corresponding to the request user; and a third determining unit configured to, in a case that the second determining unit determines that the content response packet carries the information on the container of the request user, determine whether there is a forwarding table entry, which is matched with the container identifier in the information on the container of the request user, in the FIB; and the first sending unit is further configured to, in a case that the third determining unit determines that there is a forwarding table entry, which is matched with the container identifier in the information on the container of the request user, in the FIB, forward the content response packet based on an interface in the matched forwarding table entry.

In conjunction with the fifth possible implementation of the third aspect, in an eighth possible implementation, the sixth determining module includes a fourth determining unit configured to determine that there is a PIT entry, which is matched with the content name of the requested content, in the PIT; a second sending unit configured to forward the content response packet based on an interface in the matched PIT entry determined by the fourth determining unit; a storage unit configured to store the requested content carried in the content response packet into the CS; and a removing unit configured to remove the matched PIT entry determined by the fourth determining unit from the PIT.

Base on the above technical solution, in the method, apparatus and system for forwarding a packet in an ICN according to embodiments of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

### BRIEF DESCRIPTION OF DRAWINGS

In order to more clearly illustrate the technical solutions in the embodiments of the present application, accompanying drawings used in the description of the embodiments of the present application or the conventional technology will be introduced simply below. Obviously, the accompanying drawings in the following description are just some embodiments of the application, and other drawings can be obtained by those skilled in the art according to these accompanying drawings without any creative work.
Figure 1 is a schematic flow chart of a method for forwarding a packet in an ICN according to an embodiment of the present application;
Figure 2 is a schematic diagram of a framework of a VPN network according to an embodiment of the present application;
Figure 3 is another schematic flow chart of a method for forwarding a packet in an ICN according to an embodiment of the present application;
Figure 4 is yet another schematic flow chart of a method for forwarding a packet in an ICN according to an embodiment of the present application;
Figure 5 is yet another schematic flow chart of a method for forwarding a packet in an ICN according to an embodiment of the present application;
Figure 6 is a schematic flow chart of a method for forwarding a packet in an ICN according to another embodiment of the present application;
Figure 7 is a schematic flow chart of a method for forwarding a packet in an ICN according to yet another embodiment of the present application;
Figure 8 is a schematic block diagram of a router in a public network according to an embodiment of the present application;
Figure 9 is a schematic block diagram of a sending module of a router in a public network according to an embodiment of the present application;
Figure 10 is an another schematic block diagram of a sending module of a router in a public network according to an embodiment of the present application;
Figure 11 is a schematic block diagram of a system for forwarding a packet in an ICN according to an embodiment of the present application;
Figure 12 is a schematic block diagram of a third router in a VPN of a system for forwarding a packet in an ICN according to an embodiment of the present application;
Figure 13 is a schematic block diagram of a router in a public network according to another embodiment of the present application; and
Figure 14 is a schematic block diagram of a third router in a VPN of a system for forwarding a packet in an ICN according to another embodiment of the present application.

### DESCRIPTION OF EMBODIMENTS

Hereinafter, the technical solutions in the embodiments of the present application will be described clearly and completely in conjunction with the drawings in the embodiments of the present application. Obviously, the described embodiments are only some but not all of embodiments of the present application. All the other embodiments obtained by those skilled in the art based on these embodiments in the present application without any creative labor fall within the scope of protection of the present disclosure.

It should be understood that the technical solutions in the embodiments of the present application may be applied to various information centric network ICN architectures, such as a named data network (Named Data Network, abbreviated as "NDN"), a content centric network (Content Centric Networking, abbreviated as "CCN"), a network of information (Network of information, abbreviated as "NetInf"), a data-oriented network architecture (Data-Oriented Network Architecture, abbreviated as "DONA") and an expressive internet architecture (eXpressive Internet Architecture, abbreviated as "XIA").

It also should be understood that, in the embodiments of the present application, user equipment (User Equipment, abbreviated as "UE") may be referred to as a terminal (Terminal), a mobile station (Mobile Station, abbreviated as "MS"), a mobile terminal (Mobile Terminal) and so on. The user equipment can communication with one or more core networks via a radio access network (Radio Access Network, abbreviated as "RAN"). For example, the user equipment may be a mobile phone (or referred to as "cellular" phone) or a computer having a mobile terminal, or may also be, for example, a portable mobile device, a pocket-size mobile device, a handheld mobile device, a computer built-in mobile device or a vehicle-mounted mobile device which exchange voice and/or data with the wireless access network.

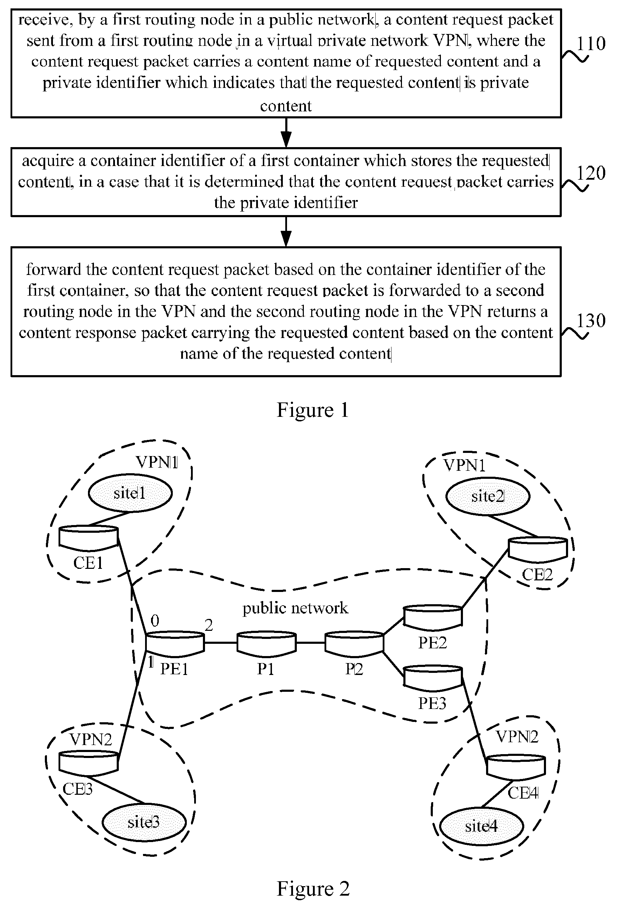

Figure 1 illustrates a schematic flow chart of a method 100 for forwarding a packet in an information centric network ICN according to an embodiment of the present application. The method in Figure 1 may be executed by a routing node in a public network. As illustrated in Figure 1, the method 100 includes S110 to S130.

In S110, a content request packet sent from a first routing node in a virtual private network VPN is received by a first routing node in a public network, where the content request packet carries a content name of requested content and a private identifier which indicates that the requested content is private content.

In S120, a container identifier of a first container which stores the requested content is acquired in a case that it is determined that the content request packet carries the private identifier.

In S130, the content request packet is forwarded based on the container identifier of the first container, so that the content request packet is forwarded to a second routing node in the VPN and the second routing node in the VPN returns a content response packet carrying the requested content based on the content name of the requested content.

Therefore, in the method for forwarding a packet in an ICN according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

In the embodiment of the present application, the container is storage space for storing a set of content. The set of content may be one or more content. For example, a whole network of a country may be regarded as a national container, and the container is storage space for all content within the network of the country; similarly, a whole network of a province may be regarded as a provincial container, and the provincial container is storage space for all content within the network of the province. In addition, a whole network of a company or organization may be regarded as storage space for all content within the network of the company or organization, a network of a mobile device such as a plane, a train or a ship may be regarded as storage space for all content within the network of the mobile device, and a network of a phone, a host or other electronic device storing content may also be regarded as storage space for all content within the network; however the embodiment of the present application is not limited thereto. Accordingly, the container identifier of the container may be any content identification prefix such as fanlingyuan.com/blog; or may be a company or an organization such as huawei.com, tsinghua.edu; or may be a mobile network, for example, a plane, a train or a ship, such as airchina/ca1314; or may be a phone, a host or other electronic device for storing content such as chinamobile/fanlingyuan; or may be a network domain such as cn, cn/gd, cn/sd; and so on. One container may correspond to one container identifier, or may correspond to more than two container identifiers, however the embodiment of the present application is not limited thereto. In the following, a case that one container corresponds to one container identifier is taken as an example for ease of description, and the container identifier refers to the container.

In addition, a container may include another container in topological relation. For example, the provincial network is a part of the national network. Therefore, it may be considered that the national container includes the provincial container in topological relation. The container may also include an access container. The access container is a container which includes at least one container in topological relation and has a forwarding table entry for routing the content request packet to the at least one container. In other words, an access container for a container includes the container in logical relation and has routing the content request packet to the container. Specifically, in a case that container B includes container A and container B has a forwarding table entry for routing the content request packet to container A, it is defined that container B is an access container for container A, and container B provides access service for container A. One container may provide access service for one or more first containers, and one or more second containers may provide access service for one container. In other words, one container may be an access container for one or more first containers, and one or more second containers may be an access container for one container.

In the network architecture, a container includes at least one routing node, and one or more routing node of the at least one routing node is responsible for forwarding a content request packet. The container is referred to as an attribution container of the at least one routing node. The content request packet may be routed to a container by one ore more routing node of at least one routing node included in the access container for the container. For example, a national container "cn" includes provincial containers "cn/gd" and "cn/sd" in topological relation, and a content request packet may be routed to the provincial containers "cn/gd" and "cn/sd" by one or more routing node included in the national container "cn", therefore, the national container "cn" provides access service for the provincial containers "cn/gd" and "cn/sd". Containers "huawei.com/cn" and "huawei.com/us" include a container "huawei.com" in topological relation, and a content request packet may be routed to the container "huawei.com" by one or more routing node included in the containers "huawei.com/cn" and "huawei.com/us", therefore, the containers "huawei.com/cn" and "huawei.com/us" provide access service for the container "huawei.com". However the embodiment of the present application is not limited thereto.

Correspondingly, in the embodiment of the present application, a virtual private network VPN established on the ICN architecture may be regarded as a VPN-level container, and the VPN-level container is storage space for all private content within the VPN. Figure 2 is a schematic diagram of a framework of a VPN network according to an embodiment of the present application. As illustrated in Figure 2, site 1 and site 2 are storage spaces for a set of private content respectively, which may be regarded as container 1 and container 2 respectively. Site 1 and site 2 compose a virtual private network VPN1, and the virtual private network may be regarded as container VPN1. Container VPN1 provides access service for container 1 and container 2. Specifically, container identifiers of container VPN1, container 1 and container 2 are huawei.com, huawei.com/site1 and huawei.com/site2, respectively. Site 3 and site 4 are storage spaces for a set of private content respectively, which may be regarded as container 3 and container 4 respectively. VPN2 composed of site 3 and site 4 may be regarded as container VPN2. Container VPN2 provides access service for container 3 and container 4. Container identifiers of container VPN2, container 3 and container 4 are cisco.com, cisco.com/site3 and cisco.com/site4, respectively. It should be understood that, in the embodiment of the present application, the first container refers to a container composed of VPNs, for example, VPN1 and VPN2 shown in Figure 2. In addition, in VPN1 and VPN2, each site is connected to a provider edge routing node (Provider Edge Routers, referred to as "PE") through a customer edge routing node (Customer Edge Routers, referred to as "CE"), and connected to routers P1 and P2 in a public network through the PE. In general, the CE and the routing node at each site in the VPN are routing nodes in the VPN, and the PE routing node and the P routing node are routing nodes in the public network; however the embodiment of the present application is not limited thereto.

In the embodiment of the present application, in view of the privacy of the private content in the VPN, the content name of the private content is not spread out of the VPN and the private content does not cached in the routing node out of the VPN, but the container identifier of the container corresponding to the VPN can be spread out of the VPN. Therefore, for routing in the VPN a content request packet for requesting private content in the VPN, forward routing for the content request packet may be determined based on the content name of the private content. In a case that the content request packet is routed to a public network (the PE routing node or the P routing node), these routing nodes can not route the content request packet by using the content name of the private content but need to route the content request packet by using a container identification of a container storing the private content since these routing nodes does not have a forwarding table entry corresponding to the content name of the private content but only has a forwarding table entry corresponding to the container identifier of the container. In this way, there is no need to specially maintain lots of different route tables for VPN service on each PE routing node and P routing node, and the forwarding and maintain processes of the PE routing node and the P routing node are the same as those in a case that the VPN service is not set up.

The requested content in S110 is private content in a VPN. The VPN may be considered as a first container, and the first container is storage space for storing a set of private content. The first container includes at least one fourth routing node, the requested content is reachable in the first container by routing through one or more fourth routing node of the at least one fourth routing node, or the requested content is reachable by routing through the first container. The requested content is reachable in the first container by routing in a case that an attribution container of the requested content is the first container, and the requested content is reachable by routing through the first container in a case that the first container provides access service for the attribution container of the requested content. The fourth routing node may be the first routing node or the second routing node in the VPN, or may not a node different from the first routing node or the second routing node in the VPN. However the embodiment of the present application is not limited thereto. Optionally, the first container may be an access container for one or more second containers, and/or one or more third container may be an access container for the first container. The access container is a container which includes at least one container and has a forwarding table entry for routing the content request packet to the at least one container. It should be understood that the "include" herein refers to "include" logically, for example, "include" in the sense of topological relation.

Optionally, in S110, the content request packet may further carry container information on the attribution container of the requested content. The container information on the attribution container may include a partial container identifier of the attribution container. For example, as illustrated in Figure 2, in a case that the requested content is content in site2 of VPN1, the content request packet may carry container information on container 2. Assumed that the content name of the requested content is itlab/2012/June01/test.ppt and the container identifier of container 1 is huawei.com/site2, the content request packet may carry {itlab/2012/June01/test.ppt|site2}, where site2 is a partial container identifier of container 2. Optionally, the content request packet may further include other information on the attribution container, for example, analyticity of the attribution container for identifying whether the attribution container is analyzable, that is, whether an analyticity system can be queried to obtain an access container for the attribution container. For security of the VPN, a content request packet sent from a first routing node in the VPN does not carry container information on the first container, and in a case that the content request packet is routed to a PE routing node in the public network, the PE routing node acquires the container identifier of the first container and adds the container identifier of the first container into the content request packet; however the embodiment of the present application is not limited thereto. Optionally, the content request packet may further include a partial container identifier of a container corresponding to a request user for the requested content, so that a content response packet carrying the requested content can be routed to the container corresponding to the request user. The container corresponding to the request user may be a container composed of a network of the request user or may be a container composed of a network of a company or an organization or a public place where the request user is in; however the embodiment of the present application is not limited thereto. As illustrated in Figure 2, a content request packet sent by a user at site1 of VPN1 may carry a partial container identifier of container1, site1. Optionally, the content request packet may further carry a user name of a request user for the requested content, i.e., a name of a request user. The name of the request user is located in the same name space as the content name of the requested content, and is similar to the content name of the requested content. The name of the request user is spread only within the first container, and is unique in the first container. However the embodiment of the present application is not limited thereto.

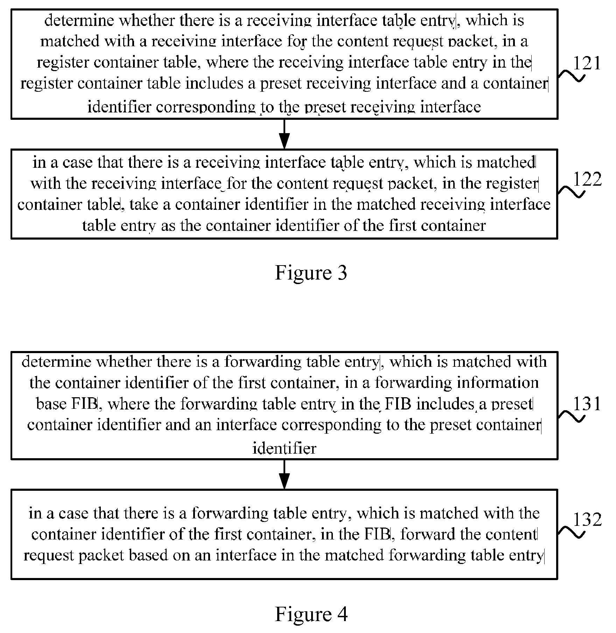

The first routing node in the public network determines that the requested content is private content after receiving the content request packet carrying private property. Since the content name of the private content is not spread in the public network, the first routing node in the public network needs to acquire the container identifier of the first container which stores the private content (a container corresponding to VPN), and forwards the content request packet based on the container identifier of the first container. Optionally, in a case that the first routing node in the public network is a PE routing node, a register container table is maintained on the PE routing node, and a receiving interface table entry in the register container table includes a preset receiving interface and a container identifier corresponding to the preset receiving interface, to determine, based on the receiving interface of the content request packet, which VPN sends the content request packet. Correspondingly, as illustrated in Figure 3, S120 of acquiring the container identifier of the first container which stores the requested content in a case that it is determined that the content request packet carries the private identifier includes S121 and S122.

In S121, it is determined whether there is a receiving interface table entry, which is matched with a receiving interface for the content request packet, in the register container table, where the receiving interface table entry in the register container table includes a preset receiving interface and a container identifier corresponding to the preset receiving interface.

In S122, in a case that there is a receiving interface table entry, which is matched with the receiving interface for the content request packet, in the register container table, a container identifier in the matched receiving interface table entry is taken as the container identifier of the first container.

Optionally, the PE routing node in the public network may further add the container identifier of the first container into the content request packet, so that a P routing node in the public network may directly acquire the container identifier of the first container from the content request packet, and there is no need to maintain a register container table. Correspondingly, the method 100 further includes S140.

In S140, the container identifier of the first container is added into the content request packet, so that the content request packet is forwarded by a second routing node in the public network based on the container identifier of the first container.

The example in Figure 2 described above is taken as an example again. The first routing node in the public network adds the container identifier of the first container into the content request packet, and the content request packet carries {itlab/2012/June01/test.ppt|huawei.com/site2}. However the embodiment of the present application is not limited thereto.

Optionally, as another embodiment, the content request packet further carries the container identifier of the first container in a case that the first routing node in the public network is a P routing node.

Correspondingly, S120 of acquiring the container identifier of the first container which stores the requested content in a case that it is determined that the content request packet carries the private identifier includes S123.

In S123, the container identifier of the first container carried in the content request packet is acquired.

The first routing node in the public network matches the container identifier of the first container with a preset container identifier in a FIB, to determine whether there is a forwarding table entry, which is matched with the container identifier of the first container, in the FIB. The match is the longest match. Optionally, the routing node in the public network may forward the content request packet to a default interface or discard the content request packet in a case that there is no forwarding table entry, which is matched with the container identifier of the first container, in the FIB. Optionally, in a case that there is a forwarding table entry, which is matched with the container identifier of the first container, in the FIB, the first routing node in the public network forwards the content request packet to a next hop interface in the matched forwarding table entry. Correspondingly, as illustrated in Figure 4, S130 of forwarding the content request packet based on the container identifier of the first container includes S131 to S132.

In S131, it is determined whether there is a forwarding table entry, which is matched with the container identifier of the first container, in a forwarding information base FIB, where the forwarding table entry in the FIB includes a preset container identifier and an interface corresponding to the preset container identifier.

In S132, in a case that there is a forwarding table entry, which is matched with the container identifier of the first container, in the FIB, the content request packet is forwarded based on an interface in the matched forwarding table entry.

Figure 2 is taken as an example again. In a case that the routing node in the public network is PE1 routing node, the PE1 searches in the FIB whether there is a forwarding table entry corresponding to the container identifier huawei.com/site2. Optionally, the FIB in the PE1 may be as illustrated in Table1. The PE1 determines that there is a forwarding table entry corresponding to the container identifier in the FIB, therefore, the PE1 may send the content request packet to interface 0. However the embodiment of the present application is not limited thereto. The content request packets received by P1 routing node and P2 routing node both carry the container identifier huawei.com/site2, therefore, P1 and P2 may search in the FIB for a forwarding table entry matching with the container identifier, and forward the content request packet to PE2 routing node based on an interface in the matched forwarding table entry. Optionally, PE2 routing node may delete the container identifier of the first container huawei.com from the content request packet before forwarding the content request packet to CE2. However, the embodiment of the present application is not limited thereto.

**Table 1 Possible Form of FIB of PE1**

| Container identifier | interface |
|---|---|
| huawei.com/site1 | 0 |
| huawei.com/site | 2 |
| cisco.com/site3 | 1 |
| cisco.com/site4 | 2 |

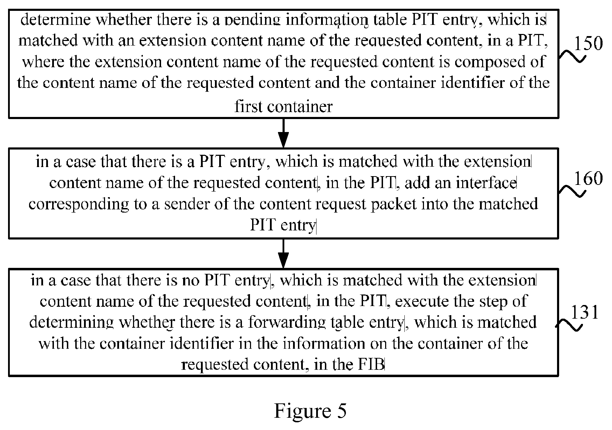

Optionally, the first routing node in the public network may be further compatible with a pending information table (Pending Information Table, abbreviated as "PIT") in the NDN. A PIT entry in the PIT may include a content name and a request interface corresponding to the content name, to record a request for content corresponding to the content name received by the first routing node in the public network and a receiving interface for the content request packet for requesting the content. In this way, repeated searching, matching and forwarding of the same requested content can be avoided, and a next hop interface for the returned requested content can also be determined. Therefore, optionally, as another embodiment illustrated in Figure 5, the method 100 further includes S150 and S160.

In S150, it is determined whether there is a pending information table PIT entry, which is matched with an extension content name of the requested content, in a PIT, before determining whether there is a forwarding table entry, which is matched with the container identifier of the first container, in the FIB. The extension content name of the requested content is composed of the content name of the request name and the container identifier of the first container.

In S160, in a case that there is a PIT entry, which is matched with the extension content name of the requested content, in the PIT, the receiving interface for the content request packet is added into the matched PIT entry.

In S131, a step of determining whether there is a forwarding table entry, which is matched with the container identifier of the first container, in the FIB, is executed, in a case that there is no PIT entry, which is matched with the extension content name of the requested content, in the PIT.

In the embodiment of the present application, the requested content is private content of the first container and is not spread in the public network, therefore, the content name of the requested content may be locally unique but not globally unique, that is, only the requested content corresponds to the content name in the first container, and there may be other content in an external network of which the content name is the same as that of the requested content. For example, in Figure 2, the content name "itlab/2012/June01/test.ppt" in the container VPN2 may be the same as a content name in the container VPN1, but the same content name represents different contents. Therefore, it is required to generate an extension content name of the requested content in the public network, i.e., out of the first container, by combining the content name of the requested content and the container identifier of the first container, to identify uniqueness of the requested content. Correspondingly, the first routing node in the public network may perform, in the PIT, accurate match and search on an extension content name of requested content after receiving a content request packet carrying a private property, and in a case that there is a PIT entry, which is matched with the extension content name of the requested content, in the PIT, add an receiving interface of the content request packet into the matched PIT entry, and optionally in a case that there is no PIT entry, which is matched with the extension content name of the requested content, in the PIT, execute S130 and add information on the content request packet into the PIT to form a new PIT entry. The new PIT entry includes the extension content name of the requested content and the receiving interface for the content request packet. However the embodiment of the present application is not limited thereto.

Optionally, in a case that the content request packet is routed to the first container, a third routing node in the VPN may forward the content request packet based on the content name of the requested content since the content name of the requested content can be spread in the VPN, and the processing method to the content request packet carrying the private property is the same as the processing method to the content request packet carrying no private property. Specifically, the third routing node in the VPN determines whether there is a forwarding table entry, which is matched with the content name of the requested content, in the FIB; in a case that there is no forwarding table entry, which is matched with the content name of the requested content, in the FIB, determines whether there is information on the container of the requested content in the FIB, where the information on the container of the requested content includes a partial container identifier of at least one fourth container which stores the requested content; in a case that the content request packet carries the information on the container of the requested content, determines whether there is a forwarding table entry, which is matched with a container identifier in the information on the container of the requested content, in the FIB; and in a case that there is a forwarding table entry, which is matched with the container identifier in the information on the container of the requested content, in the FIB, forwards the content request packet based on an interface in the matched forwarding table entry. The partial container identifier of the at least one fourth container may include a partial container identifier of an attribution container of the requested content, and may also include a partial container identifier of an access container for the attribution container of the requested content. The container identifier of the attribution container and the container identifier of the access container for the attribution container may take the container identifier of the first container as prefix. The partial container identifier may be a part of a complete container identifier obtained by removing the container identifier of the first container from the complete container identifier. However the embodiment of the present application is not limited thereto.

Within the first container, the information on the container of the requested content is used to assist the content name of the requested content to determine a forwarding route of the content request packet. Optionally, determining whether there is a forwarding table entry, which is matched with the content name of the requested content, in the forwarding information base FIB, includes: determining whether there is a forwarding table entry, which is matched with the content name of the requested content, in the FIB, based on a case that whether a prefix of the content name of the requested content matches with a content name prefix in a forwarding table entry in the FIB. In a case that there is a forwarding table entry, which is matched with the content name of the requested content, in the FIB, a third routing node in the VPN forwards the content request packet based on an interface in the matched forwarding table entry.

Optionally, the third routing node in the VPN may further cache the requested content in a content store (Content Store, abbreviated as "CS"), so that the routing node, upon receipt of a request for the same content, can directly send the requested content stored in the CS to a request user. Therefore, the process of content request is simpler and faster. Correspondingly, as another embodiment, the third routing node in the VPN may further determine whether there is content, which is matched with the content name of the requested content, in the content store CS, before determining whether there is a forwarding table entry, which is matched with the content name of the requested content, in the FIB. In a case that there is content, which is matched with the content name of the requested content, in the CS, the third routing node in the VPN may forward the matched content to a sending end of the content request packet. In a case that there is no content, which is matched with the content name of the requested content, in the CS, the third routing node in the VPN may execute the step of determining whether there is a forwarding table entry, which is matched with the content name of the requested content, in the FIB.

Optionally, the third routing node in the VPN may further query the PIT after querying the CS, to determine whether there is a request for the requested content. Correspondingly, as another embodiment, the third routing node in the VPN may further determine whether there is a PIT entry, which is matched with the content name of the requested content, in the PIT, in a case that there is no content, which is matched with the content name of the requested content, in the CS. In a case that there is a PIT entry, which is matched with the content name of the requested content, in the PIT, the third routing node in the VPN may add a receiving interface for the content request packet into the matched PIT entry. In a case that there is no PIT entry, which is matched with the content name of the requested content, in the PIT, the third routing node in the VPN may execute the step of determining whether there is a forwarding table entry, which is matched with the content name of the requested content, in the FIB.

Since the content name of the requested content is unique in the first container, the third routing node in the VPN may match the content name of the requested content with the content name stored in the PIT. Optionally, the third routing node in the VPN may add information on the content request packet into the PIT to form a new PIT entry, in a case that there is no PIT entry, which is matched with the content name of the requested content, in the PIT. The new PIT entry may include the content name of the requested content and the receiving interface for the content request packet. However the embodiment of the present application is not limited thereto.

Optionally, as another embodiment, in a case that the content request packet sent by the first routing node in the VPN is routed to an owner of the requested content, i.e., a second routing node in the VPN, the second routing node may return a content response packet carrying the requested content. For example, a content request packet sent by a request user in site1 of the VPN1 is forwarded to site2 of the VPN1, and a routing node in site2 returns a content response packet. Optionally, the content response packet may carry the requested content, the content name of the requested content and a private identifier, and may further carry a partial container identifier of a container corresponding to the request user for the requested content, such as a partial container identifier of container1, site1. However the embodiment of the present application is not limited thereto. The third routing node in the VPN, upon receipt of the content response packet carrying the private identifier and the requested content, may forward the content response packet based on a name of a request user for the requested content carried in the content response packet. The name of the request user and the content name of the requested content belong to the same name space, and the name of the request user can be spread only in the first container. Specifically, the third routing node in the VPN determines whether there is a forwarding table entry, which is matched with the name of the request user in the content response packet, in the FIB, where the forwarding table entry in the FIB includes a content name prefix and an interface corresponding to the content name prefix; and in a case that there is a forwarding table entry, which is matched with the name of the request user, in the FIB, send the content response packet based on an interface in the matched forwarding table entry. The third routing node in the VPN may match a prefix of the name of the request user with the content name prefix in the FIB, to determine whether there is a forwarding table entry, which is matched with the name of the request user, in the FIB; however the embodiment of the present application is not limited thereto. Optionally, in a case that the third routing node in the VPN has a CS, the first node may further store the requested content into the CS, so that the third routing node in the VPN can directly return the requested content upon receipt of a request for the requested content.

Optionally, the content response packet may further carry information on the container of the request user. The information on the container of the request user may include a partial container identifier of a container corresponding to the request user, and may further include a partial container identifier of an access container for the container corresponding to the request user. The container corresponding to the request user and the access container for the container corresponding to the request user may use the container identifier of the first container as prefix, and the partial container identifier is a part of a complete container identifier of the above container obtained by removing the container identifier of the first container from the complete container identifier of the above container. However the embodiment of the present application is not limited thereto. Optionally, in a case that there is no forwarding table entry, which is matched with the user name of the request user, in the FIB, the third routing node in the VPN may determine the forwarding route of the content request packet based on a case that whether there is a forwarding table entry, which is matched with the container identifier in the information on the container of the requested content, in the FIB. Correspondingly, in a case that there is no forwarding table entry, which is matched with the name of the request user, in the FIB, the third routing node in the VPN determines whether there is a forwarding table entry, which is matched with the container identifier in the information on the container of the requested content, in the FIB. In a case that there is a forwarding table entry, which is matched with the container identifier in the information on the container of the requested content, in the FIB, the third routing node in the VPN sends the content response packet based on an interface in the matched forwarding table entry.

Optionally, as another embodiment, in a case that the third routing node in the VPN has a CS, the third routing node in the VPN may further store the requested content into the CS, so that the third routing node in the VPN may directly return the requested content upon receipt of a request for the requested content.

Optionally, as another embodiment, in a case that the third routing node in the VPN has a PIT, the third routing node in the VPN may determine the forwarding route of the content response packet by determining whether the PIT includes a record of requesting the content since a receiving interface for a content request packet for requesting content received by the third routing node in the VPN can be recorded in the PIT. Correspondingly, the third routing node in the VPN may further determine whether there is a PIT entry, which is matched with the content name of the requested content, in the PIT. In a case that there is a PIT entry, which is matched with the content name of the requested content, in the PIT, the third routing node in the VPN sends the content response packet based on an interface in the matched PIT entry and removes the matched PIT entry from the PIT.

Optionally, as another embodiment, the first routing node in the public network may acquire the container identifier of the first container upon receipt of the content response packet carrying the private identifier, and forwards the content response packet based on the container identifier of the first container. Correspondingly, the method 100 further includes S170 and S180.

In S170, the content response packet returned by the second routing node in the VPN is received, where the content response packet carries the requested content, the content name of the requested content and the private identifier.

In S180, the content response packet is forwarded based on the container identifier of the first container.

The first routing node in the public network determines whether there is a forwarding table entry, which is matched with the container identifier of the first container, in the FIB, and in a case that there is a forwarding table entry, which is matched with the container identifier of the first container, in the FIB, sends the content response packet based on an interface in the matched forwarding table entry. Optionally, as another embodiment, in a case that the first routing node in the public network has a PIT, the first routing node in the public network may determine whether there is a PIT entry, which is matched with an extension content name of the requested content, in the PIT, where the extension content name of the requested content is composed of the content name of the requested content and the container identifier of the first container. In a case there is a PIT entry, which is matched with an extension content name of the requested content, in the PIT, the first routing node in the public network may send the content response packet based on an interface in the matched PIT entry, and remove the matched PIT entry from the PIT. However the embodiment of the present application is not limited thereto.

Therefore, in the method for forwarding a packet in an ICN according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

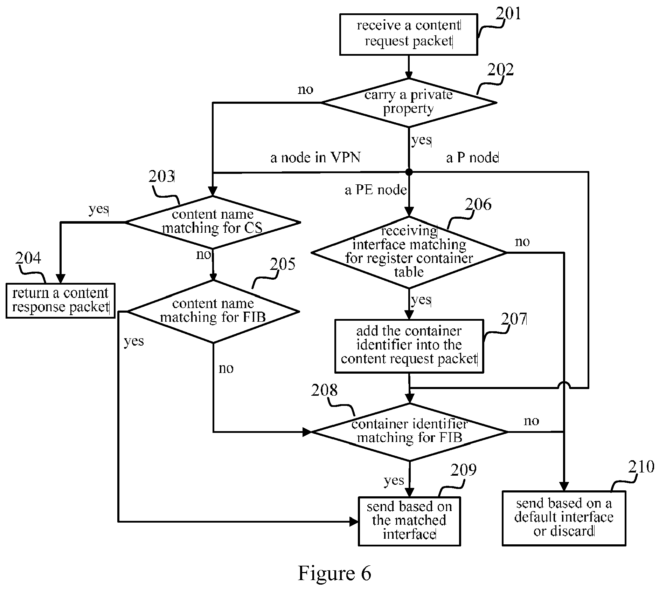

The method for forwarding a packet in an ICN provided in the embodiment of the present application will be described in more details below in conjunction with examples. Figure 6 is a schematic flow chart of a method 200 for forwarding a packet according to another embodiment of the present application. The method may be executed by a first node in a network. As illustrated in Figure 6, the method 200 includes S201 to S210.

In S201, the first node receives a content request packet, where the content request packet carries a content name of requested content.

The content request packet may further carry information on a container of the requested content. The information on the container of the requested content includes a container identifier of at least one container which stores the requested content. Optionally, in a case that the requested content is private content in the VPN, the content request packet may further carry a private property, and in this case, the information on the container of the requested content carried in the content request packet sent by a request user for the requested content includes a partial container identifier of at least one container which stores the requested content, which may include a partial container identifier of an attribution container of the requested content, and may further include a partial container identifier of an access container for the attribution container of the requested content. The partial container identifier may be a part of a complete container identifier obtained by removing the container identifier of the first container composed by the VPN from the complete container identifier, such as the partial container identifier site2 obtained by removing huawei.com from huawei.com/site2 in the example described above. Optionally, the content request packet may further carry a user name of the request user for the requested content and a container identifier of a container corresponding to the request user. However the embodiment of the present application is not limited thereto.

In S202, the first node determines whether the content request packet carries the private property.

In a case that the content request packet carries the private property, behaviors of routing nodes at different places in the network are different. A flow of forwarding the content request packet by the first node is the same as a flow of forwarding a content request packet carrying no private property, i.e., S203 is executed, in a case that the first node is a routing node in the VPN. S206 is executed by the first node in a case that the first node is a PE node in a public network. S208 is executed by the first node in a case that the first node is a P node in a public network.

In S203, the first node determines whether there is content, which is matched with the content name of the requested content, in a CS.

The first node executes S204 in a case that there is the content, which is matched with the content name of the requested content, in the CS, and the process of the first node on the content request packet ends. The first node executes S205 in a case that there is no content, which is matched with the content name of the requested content, in the CS.

In S204, the first node sends a content response packet carrying the requested content to a receiving interface for the content request packet.

The content response packet may carry the private property in a case that the requested content is private content.

In S205, the first node determines whether there is a forwarding table entry, which is matched with the content name of the requested content, in a FIB.

The forwarding table entry in the FIB includes a content name prefix and an interface corresponding to the content name prefix. The first node matches a prefix of the content name of the requested content with the content name prefix in the FIB, to determine whether there is a forwarding table entry, which is matched with the content name of the requested content, in the FIB. The first node executes S209 in a case that there is a forwarding table entry, which is matched with the content name of the requested content, in the FIB, and the process of the first node on the content request packet ends. The first node executes S208 in a case that there is no forwarding table entry, which is matched with the content name of the requested content, in the FIB.

In S206, the first node determines whether there is a receiving interface table entry, which is matched with the receiving interface for the content request packet, in a register container table.

In a case that there is a receiving interface table entry, which is matched with the receiving interface table entry for the content request packet, in the register container table, the first node executes S207, i.e., takes a container identifier in the matched receiving interface table entry as a container identifier of the first container, and adds the container identifier into the content request packet to compose a complete container identifier of at least one container which stores the requested content, and then executes S208. In a case that there is no receiving interface table entry, which is matched with the receiving interface table entry for the content request packet, in the register container table, the first node executes S210.

In S207, the first node adds the container identifier in the matched receiving interface table entry into the content request packet.

In S208, the first node determines whether there is a forwarding table entry, which is matched with the container identifier in the information on the container of the requested content, in the FIB.

The forwarding table entry in the FIB includes a preset container identifier and an interface corresponding to the preset container identifier. The first node matches the container identifier of at least one container in the information on the container of the requested content with the preset container identifier in the FIB, to determine whether there is a forwarding table entry, which is matched with the container identifier in the information on the container of the requested content, in the FIB. In a case that the content request packet does not carry the private property, the container identifier of the at least one container is a complete container identifier of the at least one container carried in the initial content request packet sent by the request user for the requested content. In a case that the content request packet carries the private property and the first node is a PE node or a P node, the container identifier of the at least one container is a complete container identifier obtained after the container identifier of the first container is added. In a case that the content request packet carries the private property and the first node is a node within the VPN, the container identifier of the at least one container may be a complete container identifier obtained after the container identifier of the first container is added, or may be a partial container identifier in which the container identifier of the first container is not added. However the embodiment of the present application is not limited thereto. The first node executes S209 in a case that there is a forwarding table entry, which is matched with the container identifier in the information on the container of the requested content, in the FIB, and the first node executes S210 in a case that there is no forwarding table entry, which is matched with the container identifier in the information on the container of the requested content, in the FIB, the process of the first node on the content request packet then ends.

In S209, the first node sends the content request packet based on an interface in the matched forwarding table entry.

In S210, the first node sends the content request packet based on a default interface, or discards the content request packet.

Therefore, in the method for forwarding a packet in an ICN according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

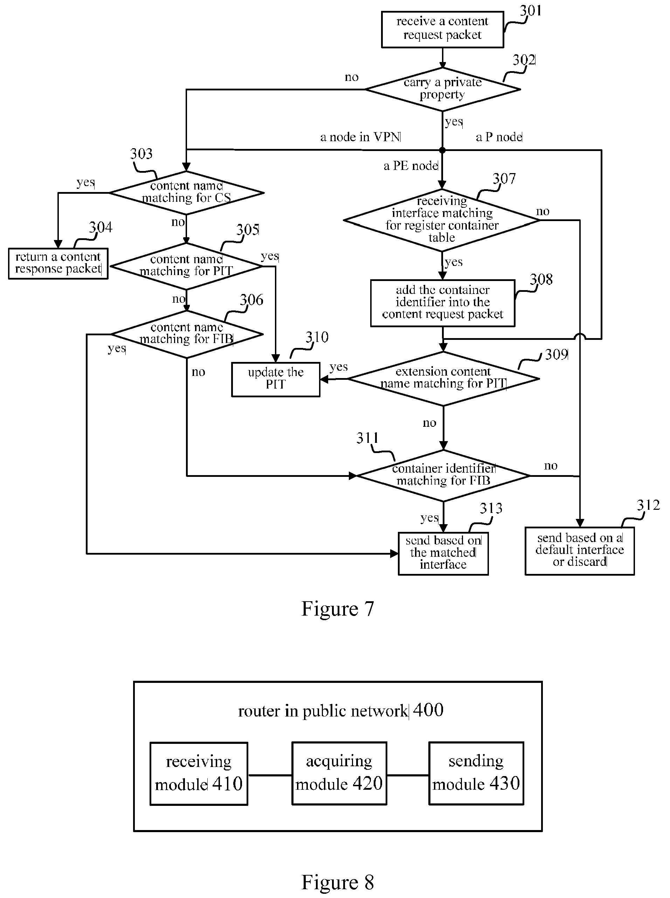

Optionally, the first node may further maintain a PIT, and determine the forwarding route for the content request packet by the PIT. Figure 7 is a schematic flow chart of a method 300 for forwarding a packet in an ICN according to yet another embodiment of the present application. As shown in Figure 7, the method 300 includes S301 to S313.

In S301, a first node receives a content request packet.

In S302, the first node determines whether the content request packet carries a private property.

In a case that the content request packet carries the private property, behaviors of routing nodes at different places in the network are different. A flow of forwarding the content request packet by the first node is the same as a flow of forwarding a content request packet carrying no private property by the first node, i.e., S303 is executed, in a case that the first node is a routing node in the VPN. S307 is executed by the first node in a case that the first node is a PE node in a public network. S3309 is executed by the first node in a case that the first node is a P node in a public network.

In S303, the first node determines whether there is content, which is matched with a content name of requested content, in a CS.

The first node executes S304 in a case that there is content, which is matched with the content name of the requested content, in the CS, and the process of the first node on the content request packet ends. The first node executes S305 in a case that there is no content, which is matched with the content name of the requested content, in the CS.

In S304, the first node sends a content response packet carrying the requested content to a receiving interface for the content request packet.

In S305, the first node determines whether there is a PIT entry, which is matched with the content name of the requested content, in a PIT.

The PIT entry in the PIT of the first node may include a content name prefix and an interface list corresponding to the content name prefix. The first node may match a prefix of the content name of the requested content with the content name prefix in the PIT, to determine whether there is a PIT entry, which is matched with the content name of the requested content, in the PIT. The first node executes S310 in a case that there is a PIT entry, which is matched with the content name of the requested content, in the PIT, and the process of the first node on the content request packet ends. The first node executes S306 in a case that there is no PIT entry, which is matched with the content name of the requested content, in the PIT.

In S306, the first node determines whether there is a forwarding table entry, which is matched with the content name of the requested content, in a FIB.

The first node executes S313 in a case that there is a forwarding table entry, which is matched with the content name of the requested content, in the FIB, and the process of forwarding the content request packet by the first node ends. The first node executes S311 in a case that there is no forwarding table entry, which is matched with the content name of the requested content, in the FIB.

In S307, the first node determines whether there is a receiving interface table entry, which is matched with the receiving interface for the content request packet, in a register container table.

In a case that there is a receiving interface table entry, which is matched with the receiving interface table entry for the content request packet, in the register container table, The first node executes S308, i.e., takes a container identifier in the matched receiving interface table entry as a container identifier of the first container, and adds the container identifier into the content request packet to compose a complete container identifier of the at least one container which stores the requested content, and then executes S309. In a case that there is no receiving interface table entry, which is matched with the receiving interface table entry for the content request packet, in the register container table, the first node executes S312.

In S308, the first node adds the container identifier in the matched receiving interface table entry into the content request packet.

In S309, the first node determines whether there is a PIT entry, which is matched with an extension content name of the requested content, in the PIT.

The extension content name of the requested content is composed of the content name of the requested content and the container identifier of the first container. Optionally, the first node may first match the content name of the requested content with the PIT entry in the PIT, and in a case that there is a PIT entry, whose front part is matched with the content name of the requested content, in the PIT, the first node continues to match the container identifier of the first container with the matched PIT entry, to determine whether the matched PIT entry is exactly matched with the extension content name of the requested content. The first node executes S310 in a case that there is a forwarding table entry, which is matched with the extension content name of the requested content, in the PIT, and the process of the first node on the content request packet ends. The first node executes S311 in a case that there is no forwarding table entry, which is matched with the extension content name of the requested content, in the PIT.

In S310, the first node updates the PIT.

The first node adds information on the content request packet into the matched PIT entry. In particularly, S310 includes adding the content name of the requested content and the receiving interface for the content request packet into the PIT by the first node to form a new PIT entry, in a case that S310 is executed by the first node after S303 and S305 are executed. S310 includes adding the extension content name of the requested content and the receiving interface for the content request packet into the PIT by the first node to form a new PIT entry, in a case that S310 is executed by the first node after S309 is executed. However the embodiment of the present application is not limited thereto.

In S311, the first node determines whether there is a forwarding table entry, which is matched with the container identifier in the information on the container of the requested content, in the FIB.

The first node executes S313 in a case that there is a forwarding table entry, which is matched with the container identifier in the information on the container of the requested content, in the FIB, and the process of the first node on the content request packet ends. The first node executes S312 in a case that there is no forwarding table entry, which is matched with the container identifier in the information on the container of the requested content, in the FIB, and the process of the first node on the content request packet ends.

In S312, the first node sends the content request packet based on a default interface, or discards the content request packet.

In S313, the first node sends the content request packet based on an interface in the matched forwarding table entry.

Therefore, in the method for forwarding a packet in an ICN according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

It should be understood that the sequence number of each process described above does not mean execution order, and the execution order of each process is determined based on the function and internal logic thereof, and the implementation process of the embodiment of the present application is not limited thereto.

It also should be understood that the examples in Figure 6 and Figure 7 assist those skilled in the art to understand the embodiment of the present application better, and do not limit the scope of the embodiment of the present application. Those skilled in the art may make various equivalent modifications and changes based on the examples given in Figure 6 and Figure 7, and the modifications and changes also fall within the scope of the embodiment of the present application.

The method for forwarding a packet in an ICN according to the embodiments of the present application is described in detail above in conjunction with Figure 1 to Figure 7, and a device and a system for forwarding a packet in an ICN according to embodiments of the present application are described in detail below in conjunction with Figure 8 to Figure 14.

Figure 8 is a schematic block diagram of a router 400 in a public network according to an embodiment of the present application. As shown in Figure 8, the router 400 includes a receiving module 410, an acquiring module 420 and a sending module 430.

The receiving module 410 is configured to receive a content request packet sent from a first router in a virtual private network VPN, where the content request packet carries a content name of requested content and a private identifier which indicates that the requested content is private content.

The acquiring module 420 is configured to acquire a container identifier of a first container which stores the requested content in a case that it is determined that the content request packet received by the receiving module 410 carries the private identifier.

The sending module 430 is configured to forward the content request packet based on the container identifier of the first container acquired by the acquiring module 420, so that the content request packet is forwarded to a second router in the VPN and the second router in the VPN returns a content response packet carrying the requested content based on the content name of the requested content.

Therefore, for the router in the public network according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

Optionally, the first container is storage space for storing a set of private content. The first container includes at least one fourth router. The requested content is reachable in the first container by routing through one or more fourth router of the at least one fourth router, or the requested content is reachable by routing through the first container. The content name of the requested content corresponds to one or more attribution containers, and the attribution container of the requested content is a container through which the requested content is directly reachable by routing. The first container is an access container for one or more second containers; and/or one or more third container is an access container for the first container. The access container is a container which includes at least one container and has a forwarding table entry for routing the content request packet to the at least one container.

Optionally, as another embodiment, the acquiring module 420 is configured to determine whether there is a receiving interface table entry, which is matched with a receiving interface for the content request packet, in a register container table, where the receiving interface table entry in the register container table includes a preset receiving interface and a container identifier corresponding to the preset receiving interface; and in a case that there is a receiving interface table entry, which is matched with the receiving interface for the content request packet, in the register container table, take a container identifier in the matched receiving interface table entry as a container identifier of the first container.

Optionally, as another embodiment, the router 400 in the public network further includes an updating module 440.

The updating module 440 is configured to add the container identifier of the first container acquired by the acquiring module 420 into the content request packet, so that a second router in the public network forwards the content request packet based on the container identifier of the first container.

Optionally, as another embodiment, the content request packet received by the receiving module 410 further carries the container identifier of the first container.

Correspondingly, the acquiring module 420 is configured to acquire the container identifier of the first container carried in the content request packet.

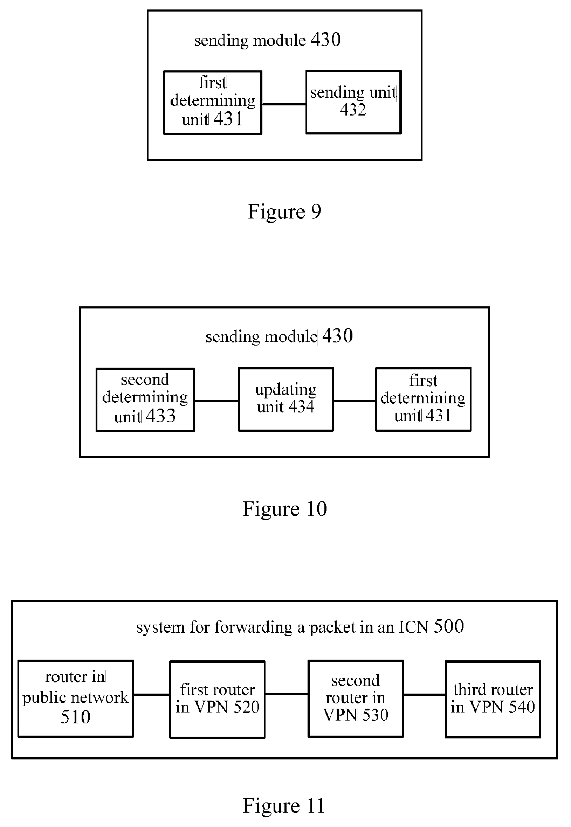

Optionally, as another embodiment, the sending module 430 includes a first determining unit 431 and a sending unit 432, as shown in Figure 9.

The first determining unit 431 is configured to determine whether there is a forwarding table entry, which is matched with the container identifier of the first container, in a forwarding information base FIB, where the forwarding table entry in the FIB includes a preset container identifier and an interface corresponding to the preset container identifier.

The sending unit 432 is configured to, in a case that the first determining unit 431 determines that there is a forwarding table entry, which is matched with the container identifier of the first container, in the FIB, forward the content request packet based on an interface in the matched forwarding table entry.

Optionally, as another embodiment, the sending module 430 further includes a second determining unit 433 and an updating unit 434, as shown in Figure 10.

The second determining unit 433 is configured to determine whether there is a pending information table PIT entry, which is matched with an extension content name of the requested content, in a PIT, before the first determining unit 431 determines whether there is a forwarding table entry, which is matched with the container identifier of the first container, in the FIB, where the extension content name of the requested content is composed of the content name of the requested content and the container identifier of the first container.

The updating unit 434 is configured to, in a case that the second determining unit 433 determines that there is a PIT entry, which is matched with the extension content name of the requested content, in the PIT, add a receiving interface for the content request packet into the matched PIT entry.

The first determining unit 431 is configured to, in a case that the second determining unit 433 determines that there is no PIT entry, which is matched with the extension content name of the requested content, in the PIT, execute the step of determining whether there is a forwarding table entry, which is matched with the container identifier of the first container, in the FIB.

Optionally, as another embodiment, the receiving module 410 is further configured to receive a content response packet returned by the second router in the VPN, where the content response packet carries the requested content, the content name of the requested content and the private identifier.

The sending module 430 is further configured to forward the content response packet received by the receiving module 410 based on the container identifier of the first container.

The router 400 according to the embodiment of the present application may correspond to the first routing node in the public network in the method for forwarding a packet in an ICN according to the embodiment of the present application, and the described or other operation and/or function of each module in the router 400 is for realizing the corresponding flow of each method in Figure 1 to Figure 7, which is not described herein any more for simplicity.

Therefore, for the router in the public network according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

Figure 11 is a schematic block diagram of a system 500 for forwarding a packet in an ICN according to an embodiment of the present application. As shown in Figure 11, the system 500 includes a router 510 in a public network, a first router 520 in a virtual private network VPN, a second router 530 in the VPN and a third router 540 in the VPN, as shown in Figure 8 to Figure 10.

Therefore, for the system for forwarding a packet in an ICN according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

The first router in the VPN sends a content request packet carrying a content name of requested content and a private property. The third router in the VPN routes the content request packet to the public network based on the content name of the requested content. A PE node in the public network acquires a container identifier of a first container composed of the VPN by a container register table, and adds the container identifier of the first container into the content request packet. In addition, the PE node forwards the content request packet to a P node based on the container identifier of the first container. The P node routes the content request packet to the second router in the VPN having the requested content based on the container identifier of the first container carried in the content request packet. The second router in the VPN returns a content response packet carrying the requested content. The content response packet may be returned to the first router in the VPN over the same route. However the embodiment of the present application is not limited thereto.

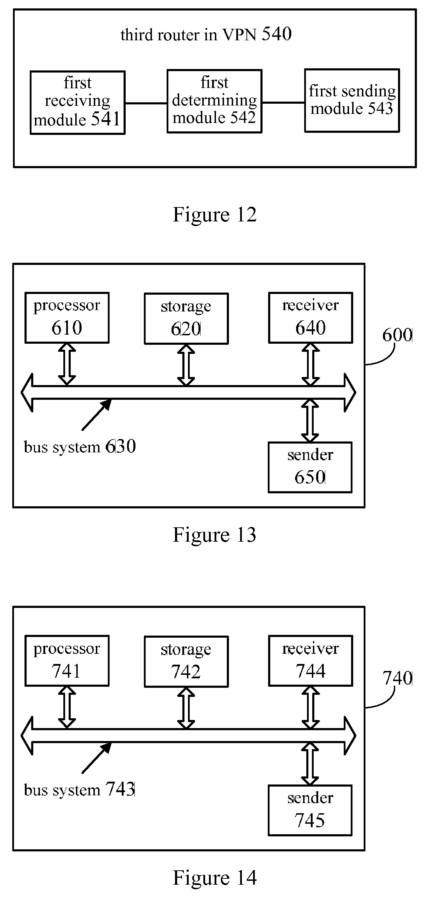

Optionally, as shown in Figure 12, the third router 540 in the VPN includes a first receiving module 541, a first determining module 542 and a first sending module 543.

The first receiving module 541 is configured to receive the content request packet sent from the first router in the VPN.

The first determining module 542 is configured to determine whether there is a forwarding table entry, which is matched with the content name of the requested content carried in the content request packet received by the first receiving module 541, in a forwarding information base FIB, where the forwarding table entry in the FIB includes a content name prefix and an interface corresponding to the content name prefix.

The first sending module 543 is configured to, in a case that the first determining module 542 determines that there is a forwarding table entry, which is matched with the content name of the requested content, in the FIB, forward the content request packet based on an interface in the matched forwarding table entry.

Optionally, as another embodiment, the third router 540 in the VPN further includes a second determining module 544 and a third determining module 545.

The second determining module 544 is configured to determine whether the content request packet carries information on the container of the requested content in a case that the first determining module 543 determines that there is no forwarding table entry, which is matched with the content name of the requested content, in the FIB, where the information on the container of the requested content includes a container identifier for identifying at least one fourth container which stores the requested content.

The third determining module 545 is configured to, in a case that the second determining module 544, determine whether there is a forwarding table entry, which is matched with the container identifier in the information on the container of the requested content, in the FIB.

The first sending module 543 is further configured to, in a case that the third determining module 545 determines that there is a forwarding table entry, which is matched with the container identifier in the information on the container of the requested content, in the FIB, send the content request packet based on an interface in the matched forwarding table entry.

Optionally, as another embodiment, the third router 540 in the VPN further includes a fourth determining module 546.

The fourth determining module 546 is configured to determine whether there is content, which is matched with the content name of the requested content, in a content store CS, before the first determining module 542 determines whether there is a forwarding table entry, which is matched with the content name of the requested content, in the FIB.

The first determining module 542 is configured to execute the step of determining whether there is a forwarding table entry, which is matched with the content name of the requested content, in the FIB, in a case that the fourth determining module 546 determines that there is no content, which is matched with the content name of the requested content, in the CS.

Optionally, as another embodiment, the third router 540 in the VPN further includes a fifth determining module 547 and a first updating module 548.

The fifth determining module 547 is configured to, in a case that the fourth determining module 546 determines that there is no content, which is matched with the content name of the requested content, in the CS, determine whether there is a PIT entry, which is matched with the content name of the requested content, in a PIT.

The first updating module 548 is configured to, in a case that the fifth determining module 547 determines that there is a PIT entry, which is matched with the content name of the requested content, in the PIT, add a receiving interface for the content request packet into the matched PIT entry.

The first determining module 542 is configured to, in a case that the fifth determining module 547 determines that there is no PIT entry, which is matched with the content name of the requested content, in the PIT, execute the step of determining whether there is a forwarding table entry, which is matched with the content name of the requested content, in the FIB.

Optionally, as another embodiment, the first receiving module 541 is further configured to receive the content response packet sent by the second router in the VPN, where the content response packet carries the requested content, the content name of the requested content and the private identifier.

Correspondingly, the third router 540 in the VPN further includes a sixth determining module 549.

The sixth determining module 549 is configured to forward the content response packet based on the content name of the requested content carried in the content response packet received by the first receiving module 541.

Optionally, as another embodiment, the content response packet received by the first receiving module 541 carries a name of a request user for the requested content.

Correspondingly, the sixth determining module 549 includes a first determining unit 549a and a first sending unit 549b.

The first determining unit 549a is configured to determine whether there is a forwarding table entry, which is matched with the name of the request user, in the FIB.

The first sending unit 549b is configured to, in a case that the first determining unit 549a determines that there is a forwarding table entry, which is matched with the name of the request user, in the FIB, forward the content response packet based on an interface in the matched forwarding table entry.

Optionally, as another embodiment, the sixth determining module 549 further includes a second determining unit 549c and a third determining unit 549d.

The second determining unit 549c is configured to, in a case that the first determining unit 549a determines that there is no forwarding table entry, which is matched with the name of the request user, in the FIB, determine whether the content response packet carries information on a container of the request user for the requested content, where the information on the container of the request user includes a container identifier for identifying at least one fifth container corresponding to the request user.

The third determining unit 549d is configured to, in a case that the second determining unit 549c determines that the content response packet carries the information on the container of the request user, determine whether there is a forwarding table entry, which is matched with the container identifier in the information on the container of the request user, in the FIB.

The first sending unit 549b is further configured to, in a case that the third determining unit 549d determines that there is a forwarding table entry, which is matched with the container identifier in the information on the container of the request user, in the FIB, forward the content response packet based on an interface in the matched forwarding table entry.

Optionally, as another embodiment, the sixth determining module 549 includes a fourth determining unit 549e, a second sending unit 549f, a storage unit 549g and a removing unit 549h.

The fourth determining unit 549e is configured to determine that there is a PIT entry, which is matched with the content name of the requested content, in the PIT.

The second sending unit 549f is configured to forward the content response packet based on an interface in the matched PIT entry determined by the fourth determining unit 549e.

The storage unit 549g is configured to store the requested content carried in the content response packet into the CS.

The removing unit 549h is configured to remove the matched PIT entry determined by the fourth determining unit 549e from the PIT.

The described or other operation and/or function of each module in the system 500 for forwarding a packet in an ICN according to the embodiment of the present application is for realizing the corresponding flow of each method in Figure 1 to Figure 7, which is not described herein any more for simplicity.

Therefore, for the system for forwarding a packet in an ICN according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

Figure 13 is a schematic block diagram of a router 600 in a public network according to another embodiment of the present application. As shown in Figure 13, the router 600 in the public network includes a processor 610, a storage 620, a bus system 630, a receiver 640 and a sender 650. The processor 610, the storage 620, the receiver 640 and the sender 650 are connected via the bus system 630. The storage 620 is configured to store instructions. The processor 610 calls the instruction stored in the storage 620 via the bus system 630. Specifically, the receiver 610 is configured to receive a content request packet sent from a first router in a virtual private network VPN, where the content request packet carries a content name of requested content and a private identifier which indicates that the requested content is private content. The processor 610 is configured to acquire a container identifier of a first container which stores the requested content in a case that it is determined that the content request packet received by the receiver 640 carries the private identifier. The sender 650 is configured to forward the content request packet based on the container identifier of the first container acquired by the processor 610, so that the content request packet is forwarded to a second router in the VPN and the second router in the VPN returns a content response packet carrying the requested content based on the content name of the requested content.

Therefore, for the router in a public network for forwarding a packet according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

It should be understood that, in the embodiment of the present application, the processor 610 may be a central processing unit (Central Processing Unit, abbreviated as "CPU"). The processor 610 may also be other general processor, a digital signal processor (DSP), an application specific integrated circuit (ASIC), a field programmable gate array (FPGA), other programmable logical device, a discrete gate, a transistor logic device, a discrete hardware component or the like. The general processor may be a microprocessor, or the processor may also be any normal processor.

The storage 620 may include a read-only memory and a random access memory, and provide an instruction and data for the processor 610. A part of the storage 620 may further include a nonvolatile random access memory. For example, the storage 620 may further store information on device type.

The bus system 630 may further include a power bus, a control bus, a state signal bus and so on, besides a data bus. Various buses in the drawings are denoted as the bus system 630 for clarity.

In an implementation, each step of the method described above may be realized by a software instruction or a hardware logic integrated circuit in the processor 610. The step of the method disclosed in conjunction with the embodiment of the present application may be realized by a hardware processor directly, or by a combination of a software module and a hardware module in the processor. The software module may be located in a mature storage medium in the art such as a random storage, a flash memory, a read-only memory, a programmable read-only memory, an electrically erasable programmable memory and a register. The storage medium is located in the storage 620, and the processor 610 reads information in the storage 620 and realizes the steps of the method described above in conjunction with the hardware of the processor. The detailed description is omitted to avoid repetition.

Optionally, the first container is storage space for storing a set of private content. The first container includes at least one fourth router, and the requested content is reachable in the first container by routing through one or more fourth router of the at least one fourth router, or the requested content is reachable by routing through the first container. The content name of the requested content corresponds to one or more attribution containers, and the attribution container of the requested content is a container through which the requested content is directly reachable by routing. The first container is an access container for one or more second containers; and/or one or more third container is an access container for the first container. The access container is a container which includes at least one container and has a forwarding table entry for routing the content request packet to the at least one container.

Optionally, as another embodiment, the processor 610 is configured to determine whether there is a receiving interface table entry, which is matched with a receiving interface for the content request packet, in a register container table, where the receiving interface table entry in the register container table includes a preset receiving interface and a container identifier corresponding to the preset receiving interface; and in a case that there is a receiving interface table entry, which is matched with the receiving interface for the content request packet, in the register container table, take a container identifier in the matched receiving interface table entry as a container identifier of the first container.

Optionally, as another embodiment, the processor 610 is further configured to add the container identifier of the first container into the content request packet, so that the second router in the public network forwards the content request packet based on the container identifier of the first container.

Optionally, as another embodiment, the content request packet received by the receiver 640 further carries the container identifier of the first container.

Correspondingly, the processor 610 is configured to acquire the container identifier of the first container carried in the content request packet.

Optionally, as another embodiment, the processor 610 is further configured to determine whether there is a forwarding table entry, which is matched with the container identifier of the first container, in a forwarding information base FIB, where the forwarding table entry in the FIB includes a preset container identifier and an interface corresponding to the preset container identifier.

The sender 650 is configured to, in a case that the processor 610 determines that there is a forwarding table entry, which is matched with the container identifier of the first container, in the FIB, forward the content request packet based on an interface in the matched forwarding table entry.

Optionally, as another embodiment, the processor 610 is further configured to determine whether there is a pending information table PIT entry, which is matched with an extension content name of the requested content, in a PIT, before determining whether there is a forwarding table entry, which is matched with the container identifier of the first container, in the FIB, where the extension content name of the requested content is composed of the content name of the requested content and the container identifier of the first container; to, in a case that there is a PIT entry, which is matched with the extension content name of the requested content, in the PIT, add the receiving interface for the content request packet into the matched PIT entry; and to, in a case that there is no PIT entry, which is matched with the extension content name of the requested content, in the PIT, execute the step of determining whether there is a forwarding table entry, which is matched with the container identifier of the first container, in the FIB.

Optionally, as another embodiment, the receiver 640 is further configured to receive a content response packet returned by the second router in the VPN, where the content response packet carries the requested content, the content name of the requested content and the private identifier; the sender 650 is further configured to forward the content response packet received by the receiver 640 based on the container identifier of the first container.

The router 600 according to the embodiment of the present application may correspond to the first router node in the public network in the method for forwarding a packet in an ICN according to the embodiment of the present application, the described or other operation and/or function of each module in the router 600 is for realizing the corresponding flow of each method in Figure 1 to Figure 7, which is not described herein any more for simplicity.

Therefore, for the router in the public network according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

A system 700 for forwarding a packet in an ICN according to an embodiment of the present application includes a router 710 in a public network, a first router 720 in a virtual private network VPN, a second router 730 in the VPN and a third router 740 in the VPN, as shown in Figure 13.

Therefore, for the system for forwarding a packet in an ICN according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

Optionally, as shown in Figure 14, the third router 740 in the VPN includes a processor 741, a storage 742, a bus system 743, a receiver 744 and a sender 745. The processor 741, the storage 742, the receiver 744 and the sender 745 are connected via the bus system 743. The storage 742 is configured to store instructions. The processor 741 calls the instruction stored in the storage 742 via the bus system 743. The receiver 744 is configured to receive a content request packet sent from the first router in the VPN. The processor 741 is configured to determine whether there is a forwarding table entry, which is matched with the content name of the requested content carried in the content request packet received by the receiver 744, in a forwarding information base FIB. The forwarding table entry in the FIB includes a content name prefix and an interface corresponding to the content name prefix. The sender 745 is configured to, in a case that the processor 741 determines that there is a forwarding table entry, which is matched with the content name of the requested content, in the FIB, forward the content request packet based on an interface in the matched forwarding table entry.

Optionally, as another embodiment, the processor 741 is further configured to: determine whether the content request packet carries information on a container of the requested content in a case that there is no forwarding table entry. Which is matched with the content name of the requested content, in the FIB, where the information on the container of the requested content includes a container identifier for identifying at least one fourth container which stores the requested content; and determine whether there is a forwarding table entry, which is matched with a container identifier in the information on the container of the requested content, in the FIB.

The sender 745 is further configured to, in a case that the processor 741 determines that there is a forwarding table entry, which is matched with the container identifier in the information on the container of the requested content, in the FIB, send the content request packet based on an interface in the matched forwarding table entry.

Optionally, as another embodiment, the processor 741 is further configured to determine whether there is content, which is matched with the content name of the requested content, in a content store CS, before determining whether there is a forwarding table entry, which is matched with the content name of the requested content, in the FIB; and in a case that there is no content, which is matched with the content name of the requested content, in the CS, execute the step of determining whether there is a forwarding table entry, which is matched with the content name of the requested content, in the FIB.

Optionally, as another embodiment, the processor 741 is further configured to: in a case that there is no content, which is matched with the content name of the requested content, in the CS, determine whether there is a PIT entry, which is matched with the content name of the requested content, in a PIT; in a case that there is a PIT entry, which is matched with the content name of the requested content, in the PIT, add a receiving interface for the content request packet into the matched PIT entry; and in a case that there is no PIT entry, which is matched with the content name of the requested content, in the PIT, execute the step of determining whether there is a forwarding table entry, which is matched with the content name of the requested content, in the FIB.

Optionally, as another embodiment, the receiver 744 is further configured to receive a content response packet sent by the second router in the VPN, where the content response packet carries the requested content, the content name of the requested content and the private identifier. Correspondingly, the processor 741 is further configured to forward the content response packet based on the content name of the requested content carried in the content response packet received by the receiver 744.

Optionally, as another embodiment, the content response packet received by the receiver 744 carries a name of a request user for the requested content.

Correspondingly, the processor 741 is further configured to determine whether there is a forwarding table entry, which is matched with the name of the request user, in the FIB.

The sender 745 is further configured to, in a case that the processor 741 determines that there is a forwarding table entry, which is matched with the name of the request user, in the FIB, forward the content response packet based on an interface in the matched forwarding table entry.

Optionally, as another embodiment, the processor 741 is further configured to determine whether the content response packet carries information on a container of the request user for the requested content in a case that there is no forwarding table entry, which is matched with the name of the request user, in the FIB, where the information on the container of the request user includes a container identifier for identifying at least one fifth container corresponding to the request user; and determine whether there is a forwarding table entry, which is matched with a container identifier in the information on the container of the request user, in the FIB, in a case that the content response packet carries the information on the container of the request user.

The sender 745 is further configured to, in a case that the processor 741 determines that there is a forwarding table entry, which is matched with the container identifier in the information on the container of the request user, in the FIB, forward the content response packet based on an interface in the matched forwarding table entry.

Optionally, as another embodiment, the processor 741 is further configured to determine that there is a PIT entry, which is matched with the content name of the requested content, in the PIT.

The sender 745 is further configured to forward the content response packet based on an interface in the matched PIT entry determined by the processor 741.

The processor 741 is further configured to store the requested content carried in the content response packet into the CS, and remove the matched PIT entry from the PIT.

The described or other operation and/or function of each module in the system 700 for forwarding a packet in an ICN according to the embodiment of the present application is for realizing the corresponding flow of each method in Figure 1 to Figure 7, which is not described herein any more for simplicity.

Therefore, for the system for forwarding a packet in an ICN according to the embodiment of the present application, the property of the content in the ICN system is extended by adding the private property and the information on the container of the content on the basis of the content name, to establish VPN service under the ICN architecture. The routing node in the public network forwards the content request packet for requesting the content based on the container identifier of the container corresponding to the VPN, so that the content name of the content in the VPN is not spread out of the VPN, therefore, the privacy of the content in the VPN is ensured without increasing extra devices or route tables, thereby realizing high quality service with low cost and improving user experience.

It should be understood that, in the embodiments of the present application, the term "and/or" is only used to indicate an association relationship for describing associated objects, and refers to three relations. For example, A and/or B may refer to three cases, i.e., only A, both A and B, and only B. In addition, the character "/" herein refers to that there is an "or" relation between the associated objects before and after the character "/".

It may be known by those skilled in the art that, units and steps in each method described in conjunction with the embodiments disclosed herein can be realized by electronic hardware, computer software or a combination thereof. In order to clearly illustrate interchangeability of the hardware and the software, steps and composition of each embodiment have been described generally in view of functions in the above specification. Whether the function is executed in a hardware way or in a software way depends on application of the technical solution and design constraint condition. Those skilled in the art can use different method for each application to realize the described function, and this is not considered to be beyond the scope of the application.

It may be clearly understood by those skilled in the art that, for ease of describing and for simplicity, an operating process of the system, the apparatus and the unit described above may refer to the process in the above method embodiment, which is not described herein any more.

In the embodiments provided in the present application, it should be understood that, the disclosed system, apparatus and method may be implemented in other ways. For example, the device embodiment described above is only schematic. For example, the units are divided based on a logic function, and the units may be divided in another ways in actual implementation. For example, multiple units or components may be combined or integrated into another system, or some features may be omitted or not executed. In addition, the illustrated or discussed coupling, direct coupling or communication connection between each other may be indirect coupling or communication connection via some interfaces, devices or units, or may be in an electrical form, a mechanical form or other form.

The units illustrated as separated components may be or may not be separated physically, and the component illustrated as a unit may be or may not be a physical unit, that is, the components may be located at the same place, or may be distributed on multiple network units. A part of or all of units may be chosen according to actual needs to realize the object of the embodiment the present application.

In addition, each function unit according to each embodiment of the present application may be integrated into one processing unit, or may be a separate unit physically, or two or more units are integrated into one unit. The integrated unit described above may be realized in a hardware way, or may be realized by a software function unit.

The integrated unit may be stored in a computer readable storage medium if the integrated unit is implemented in a software function unit and sold or used as a separate product. Base on such understanding, the essential part of the technical solution of the present application or the part of the technical solution of the present application contributed to the conventional technology or all of or a part of the technical solution may be embodied in a software product way. The computer software product is stored in a storage medium, which includes several instructions to make a computer device (may be a personal computer, a server, a network device or the like) execute all or a part of steps of the method according to each embodiment of the present application. The storage medium described above includes various mediums which can store program codes such as a USB disk, a mobile hard disk, a read-only memory (Read-Only Memory, abbreviated as "ROM"), a random access memory (Random Access Memory, abbreviated as "RAM"), a disk and a compact disc.

The foregoing are only specific embodiments of the present application, and the scope of protection of the present application is not limited thereto. Those skilled in the art can be easy to think various equivalent modifications and substitutions within the technical scope disclosed in the present application, these modifications and substitutions should fall within the scope of protection of the present application. Therefore, the scope of protection of the present application should consist with the scope of protection of the claims.

## Claims

1. A method for forwarding a packet in an information centric network ICN, comprising:
receiving, by a first routing node in a public network, a content request packet sent from a first routing node in a virtual private network VPN, wherein the content request packet carries a content name of requested content and a private identifier which indicates that the requested content is private content;
acquiring a container identifier of a first container which stores the requested content, in a case that it is determined that the content request packet carries the private identifier; and
forwarding the content request packet based on the container identifier of the first container, so that the content request packet is forwarded to a second routing node in the VPN and the second routing node in the VPN returns a content response packet carrying the requested content based on the content name of the requested content.

2. The method according to claim 1, wherein the first container is storage space for storing a set of private content.

3. The method according to claim 1 or 2, wherein the first container comprises at least one fourth routing node, and the requested content is reachable in the first container by routing through one or more fourth routing nodes of the at least one fourth routing node, or the requested content is reachable by routing through the first container.

4. The method according to claim 1 or 2, wherein the content name of the requested content corresponds to one or more attribution containers, and the attribution container of the requested content is a container through which the requested content is directly reachable by routing.

5. The method according to any one of claims 1 to 4, wherein the first container is an access container for one or more second containers; and/or
one or more third container is an access container for the first container;
wherein the access container is a container which comprises at least one container and has a forwarding table entry for routing the content request packet to the at lease one container.

6. The method according to any one of claims 1 to 5, wherein acquiring the container identifier of the first container which stores the requested content in a case that it is determined that the content request packet carries the private identifier comprises:
determining whether there is a receiving interface table entry, which is matched with a receiving interface for the content request packet, in a register container table, wherein the receiving interface table entry in the register container table comprises a preset receiving interface and a container identifier corresponding to the preset receiving interface; and
in a case that there is a receiving interface table entry, which is matched with the receiving interface for the content request packet, in the register container table, taking a container identifier in the matched receiving interface table entry as the container identifier of the first container.

7. The method according to claim 6, further comprising:
adding the container identifier of the first container into the content request packet, so that the content request packet is forwarded by a second routing node in the public network based on the container identifier of the first container.

8. The method according to any one of claims 1 to 5, wherein the content request packet further carries the container identifier of the first container; and
acquiring the container identifier of the first container which stores the requested content in a case that it is determined that the content request packet carries the private identifier comprises:
acquiring the container identifier of the first container carried in the content request packet.

9. The method according to any one of claims 1 to 8, wherein forwarding the content request packet based on the container identifier of the first container comprises:
determining whether there is a forwarding table entry, which is matched with the container identifier of the first container, in a forwarding information base FIB, wherein the forwarding table entry in the FIB comprises a preset container identifier and an interface corresponding to the preset container identifier; and
in a case that there is a forwarding table entry, which is matched with the container identifier of the first container, in the FIB, forwarding the content request packet based on an interface in the matched forwarding table entry.

10. The method according to claim 9, further comprising:
determining whether there is a pending information table PIT entry, which is matched with an extension content name of the requested content, in a PIT, before determining whether there is a forwarding table entry, which is matched with the container identifier of the first container, in the FIB, wherein the extension content name of the requested content is composed of the content name of the requested content and the container identifier of the first container;
in a case that there is a PIT entry, which is matched with the extension content name of the requested content, in the PIT, adding a receiving interface for the content request packet into the matched PIT entry; and
in a case that there is no PIT entry, which is matched with the extension content name of the requested content, in the PIT, executing the step of determining whether there is a forwarding table entry, which is matched with the container identifier of the first container, in the FIB.

11. The method according to any one of claims 1 to 10, further comprising:
receiving the content response packet returned by the second routing node in the VPN, wherein the content response packet carries the requested content, the content name of the requested content and the private identifier; and
forwarding the content response packet based on the container identifier of the first container.

12. A router in a public network, comprising:
a receiving module, configured to receive a content request packet sent from a first router in a virtual private network VPN, wherein the content request packet carries a content name of requested content and a private identifier which indicates that the requested content is private content;
an acquiring module, configured to acquire a container identifier of a first container which stores the requested content in a case that it is determined that the content request packet received by the receiving module carries the private identifier; and
a sending module, configured to forward the content request packet based on the container identifier of the first container acquired by the acquiring module, so that the content request packet is forwarded to a second router in the VPN and the second router in the VPN returns a content response packet carrying the requested content based on the content name of the requested content.

13. The router in the public network according to claim 12, wherein the first container is storage space for storing a set of private content.

14. The router in the public network according to claim 12 or 13, wherein the first container comprises at least one fourth router, and the requested content is reachable in the first container by routing through one or more fourth router of the at least one fourth router, or the requested content is reachable by routing through the first container.

15. The router in the public network according to claim 12 or 13, wherein the content name of the requested content corresponds to one or more attribution containers, and the attribution container of the requested content is a container through which the requested content is directly reachable by routing.

16. The router in the public network according to any one of claims 12 to 15, wherein the first container is an access container for one or more second containers; and/or
one or more third container is an access container for the first container;
wherein the access container is a container which comprises at least one container and has a forwarding table entry for routing the content request packet to the at least one container.

17. The router in the public network according to any one of claims 12 to 16, wherein the acquiring module is configured to determine whether there is a receiving interface table entry, which is matched with a receiving interface for the content request packet, in a register container table, wherein the receiving interface table entry in the register container table comprises a preset receiving interface and a container identifier corresponding to the preset receiving interface; and to, in a case that there is a receiving interface table entry, which is matched with the receiving interface for the content request packet, in the register container table, take a container identifier in the matched receiving interface table entry as the container identifier of the first container.

18. The router in the public network according to claim 17, further comprising:
an updating module, configured to add the container identifier of the first container acquired by the acquiring module into the content request packet, so that the content request packet is forwarded by a second router in the public network based on the container identifier of the first container.

19. The router in the public network according to any one of claims 12 to 16, wherein the content request packet received by the receiving module further carries the container identifier of the first container; and
the acquiring module is configured to acquire the container identifier of the first container carried in the content request packet.

20. The router in the public network according to any one of claims 12 to 19, wherein the sending module comprises:
a first determining unit, configured to determine whether there is a forwarding table entry, which is matched with the container identifier of the first container, in a forwarding information base FIB, wherein the forwarding table entry in the FIB comprises a preset container identifier and an interface corresponding to the preset container identifier; and
a sending unit, configured to in a case that the first determining unit determines that there is a forwarding table entry, which is matched with the container identifier of the first container, in the FIB, forward the content request packet based on an interface in the matched forwarding table entry.

21. The router in the public network according to claim 20, wherein the sending module further comprises:
a second determining unit, configured to determine whether there is a pending information table PIT entry, which is matched with an extension content name of the requested content, in a PIT, before the first determining unit determines whether there is a forwarding table entry, which is matched with the container identifier of the first container, in the FIB, wherein the extension content name of the requested content is composed of the content name of the requested content and the container identifier of the first container; and
an updating unit, configured to in a case that the second determining unit determines that there is a PIT entry, which is matched with the extension content name of the requested content, in the PIT, add a receiving interface for the content request packet into the matched PIT entry; and
the first determining unit is configured to, in a case that the second determining unit determines that there is no PIT entry, which is matched with the extension content name of the requested content, in the PIT, execute the step of determining whether there is a forwarding table entry, which is matched with the container identifier of the first container, in the FIB.

22. The router in the public network according to any one of claims 12 to 21, wherein the receiving module is further configured to receive the content response packet returned by the second router in the VPN, wherein the content response packet carries the requested content, the content name of the requested content and the private identifier; and
the sending module is further configured to forward the content response packet received by the receiving module based on the container identifier of the first container.

23. A system for forwarding a packet in an information centric network ICN, comprising the router in the public network, the first router in the virtual private network VPN, the second router in the VPN and a third router in the VPN according to any one of claims 12 to 22.

24. The system according to claim 23, wherein the third router in the VPN comprises:
a first receiving module configured to receive the content request packet sent by the first router in the VPN;
a first determining module configured to determine whether there is a forwarding table entry, which is matched with the content name of the requested content carried in the content request packet received by the first receiving module, in a forwarding information base FIB, wherein the forwarding table entry in the FIB comprises a content name prefix and an interface corresponding to the content name prefix; and
a first sending module configured to, in a case that the first determining module determines that there is a forwarding table entry, which is matched with the content name of the requested content, in the FIB, forward the content request packet based on an interface in the matched forwarding table entry.

25. The system according to claim 24, wherein the third router in the VPN further comprises:
a second determining module configured to, in a case that the first determining module determines that there is no forwarding table entry, which is matched with the content name of the requested content, in the FIB, determine whether the content request packet carries information on the container of the requested content, wherein the information on the container of the requested content comprises a container identifier for identifying at least one fourth container which stores the requested content; and
a third determining module configured to, in a case that the second determining module, determine whether there is a forwarding table entry, which is matched with the container identifier in the information on the container of the requested content, in the FIB; and
the first sending module is further configured to, in a case that the third determining module determines that there is a forwarding table entry, which is matched with the container identifier in the information on the container of the requested content, in the FIB, send the content request packet based on an interface in the matched forwarding table entry.

26. The system according to claim 24 or 25, wherein the third router in the VPN further comprises:
a fourth determining module configured to determine whether there is content, which is matched with the content name of the requested content, in a content store CS, before the first determining module determines whether there is a forwarding table entry, which is matched with the content name of the requested content, in the FIB; and
the first determining module is configured to, in a case that the fourth determining module determines that there is no content, which is matched with the content name of the requested content, in the CS, execute the step of determining whether there is a forwarding table entry, which is matched with the content name of the requested content, in the FIB.

27. The system according to claim 26, wherein the third router in the VPN further comprises:
a fifth determining module configured to, in a case that the fourth determining module determines that there is no content, which is matched with the content name of the requested content, in the CS, determine whether there is a PIT entry, which is matched with the content name of the requested content, in the PIT; and
a first updating module configured to, in a case that the fifth determining module determines that there is a PIT entry, which is matched with the content name of the requested content, in the PIT, add a receiving interface for the content request packet into the matched PIT entry; and
the first determining module is configured to, in a case that the fifth determining module determines that there is no PIT entry, which is matched with the content name of the requested content, in the PIT, execute the step of determining whether there is a forwarding table entry, which is matched with the content name of the requested content, in the FIB.

28. The system according to any one of claims 24 to 27, wherein the first receiving module is further configured to receive the content response packet sent by the second router in the VPN, wherein the content response packet carries the requested content, the content name of the requested content and the private identifier;
the third router in the VPN further comprises:
a sixth determining module configured to forward the content response packet based on the content name of the requested content carried in the content response packet received by the first receiving module.

29. The system according to claim 28, wherein the content response packet received by the first receiving module carries a name of a request user for the requested content;
the sixth determining module comprises:
a first determining unit configured to determine whether there is a forwarding table entry, which is matched with the name of the request user, in the FIB; and
a first sending unit configured to, in a case that the first determining unit determines that there is a forwarding table entry, which is matched with the name of the request user, in the FIB, forward the content response packet based on an interface in the matched forwarding table entry.

30. The system according to claim 29, wherein the sixth determining module further comprises:
a second determining unit configured to, in a case that the first determining unit determines that there is no forwarding table entry, which is matched with the name of the request user, in the FIB, determine whether the content response packet carries information on a container of the request user for the requested content, wherein the information on the container of the request user comprises a container identifier for identifying at least one fifth container corresponding to the request user; and
a third determining unit configured to, in a case that the second determining unit determines that the content response packet carries the information on the container of the request user, determine whether there is a forwarding table entry, which is matched with a container identifier in the information on the container of the request user, in the FIB; and
the first sending unit is further configured to, in a case that the third determining unit determines that there is a forwarding table entry, which is matched with the container identifier in the information on the container of the request user, in the FIB, forward the content response packet based on an interface in the matched forwarding table entry.

31. The system according to claim 28, wherein the sixth determining module comprises:
a fourth determining unit configured to determine that there is a PIT entry, which is matched with the content name of the requested content, in the PIT;
a second sending unit configured to forward the content response packet based on an interface in the matched PIT entry determined by the fourth determining unit;
a storage unit configured to store the requested content carried in the content response packet into the CS; and
a removing unit configured to remove the matched PIT entry determined by the fourth determining unit from the PIT.
